# EUROPÄISCHE PATENTSCHRIFT

(11) **EP 1 492 968 B1**
(45) Veröffentlichungstag und Bekanntmachung des Hinweises auf die Patenterteilung: **12.10.2005**
(21) Anmeldenummer: 03745767.8
(22) Anmeldetag: 20.03.2003
(51) Int. Cl.: F16H 61/30, F16H 63/30

(54) **VORRICHTUNG ZUR LAGERUNG UND ZUR ZUMINDEST HILFSWEISEN BETÄTIGUNG EINES SCHALTELEMENTES**
DEVICE FOR RECEIVING AND AT LEAST TEMPORARILY ACTUATING A SHIFTING ELEMENT
DISPOSITIF DE LOGEMENT ET D'ACTIONNEMENT AU MOINS AUXILIAIRE D'UN ELEMENT DE COUPLAGE

(30) Priorität: 11.04.2002 DE 10215874
(43) Veröffentlichungstag der Anmeldung: 05.01.2005
(73) Patentinhaber: INA-Schaeffler KG, 91074 Herzogenaurach (DE)
(72) Erfinder: SCHNAPP, Peter, 90431 Nürnberg (DE); BELATSCHEK, Melanie, 91489 Wilhelmsdorf (DE)
(86) Internationale Anmeldenummer: PCT/EP2003/002896
(87) Internationale Veröffentlichungsnummer: WO 2003/085291

(56) Entgegenhaltungen:
- EP-A- 1 164 316
- DE-A- 19 725 226
- DE-C- 19 580 454
- DE-C- 19 615 267
- GB-A- 953 145

## Beschreibung

Die Erfindung betrifft eine Vorrichtung zur Lagerung und zur zumindest hilfsweisen Betätigung eines Schaltelementes, wobei das Schaltelement, zumindest mittels wenigstens eines in dem Druckraum längs beweglichen sowie mit druckbeaufschlagten Kolbens unterstützt, bei einer Schaltbewegung längs relativ zu einem dünnwandigen Lagerring bewegbar ist und wobei die das Schaltelement mittels sich an dem Lagerring abwälzenden Wälzkörpern abgestützt ist.

### Hintergrund der Erfindung

Das Schaltelement ist beispielsweise eine Schaltschiene oder Schaltstange, die auf eine Schaltgabel und über die Schaltgabel auf eine Schiebemuffe einwirkt. Mittels eines hydraulischen Druckmittels oder Druckluft ist ein Kolbentrieb betätigt. Der Kolbentrieb weist in der Regel zwei miteinander in Wechselwirkung stehende Kolben auf. Dabei ist das Schaltelement mittels der längs in Druckräumen beweglichen Kolben abwechselnd in die eine oder andere Richtung längs begrenzt verschiebbar zu einem Gehäuse eines Wechselgetriebes gelagert. Jeweils ein Kolben greift vorzugsweise an einem in Längsrichtung weisenden Ende der Schaltschiene oder Stange an. Bei einer Schaltbewegung des Schaltelementes ist einer der Druckräume durch das Druckmittel derartig druckbeaufschlagt, dass jeweils der diesen Druckraum begrenzende Kolben eine Kraft an der Schaltschiene erzeugt. Die Kraft ist längs mit der Schaltbewegung gerichtet, verschiebt entweder das Schaltelement längs oder unterstützt das Verschieben des Schaltelementes. Die Vorrichtung ist also in Getrieben einsetzbar, bei denen das Schaltelement entweder ausschließlich mit Hilfe des Druckmittels betätigt oder mittels des Druckmittels hilfskraftbetätigt ist. Die hilfskraftbetätigte Vorrichtung ist vorwiegend in Nutfahrzeugen eingesetzt, bei denen der Handschaltvorgang servounterstützt abläuft.

EP 1 164 316 A2 zeigt eine gattungsgemäße Vorrichtung. Ein Kolben an einer Schaltschiene weist an seinem Außenumfang ein Dichtelement zwischen dem Kolben und einem zumeist zylindrisch ausgebildeten Druckraum auf. Das Dichtelement ist aus wenigstens einer zumindest zeitweise gegen die Wandung anliegenden Dichtlippe einer Dichtung gebildet. Die Dichtung dichtet dabei den einseitig von dem Kolben begrenzten sowie durch den Hub des Kolbens in seiner Größe veränderlichen Druckraum gegen die restliche Umgebung des Getriebes druckdicht oder mit geringer Leckage ab. Gleichzeitig führt bzw. lagert die Dichtung den Kolben an der Wandung des Druckraumes. Gegen Querkräfte stützt sich das Schaltelement demnach mittels der Kolben über die Dichtung(en) an der Wandung des Druckraumes ab. Die zumeist aus Kunststoff, und vorteilhaft aus gummielastischen Werkstoffen gebildete Dichtung ist durch derartige quer zur Längsbewegung des Kolbens wirkende Kräfte unvorteilhaft belastet. Der Druckraum ist in der Regel unzureichend abgedichtet und der Kolben bzw. die Dichtung verschleißen vorzeitig.

In EP 1 164 316 A2 ist auf die Führung von Schaltelementen mittels spielfreien Lagereinheiten aus Wälzkörpern und federnd gegen die Wälzkörper vorgespannten Laufbahnen verwiesen. In derartigen Lagerungen ist das Schaltelement zumeist mittels Kugeln in dem Getriebe wenigstens linear beweglich gelagert. Die Wälzkörper wälzen sich an Laufbahnen von dünnwandigen Innen- bzw. Außenringen ab. Die Ringe sind aus Stahlblech geformt. Bei dem Einbau der Lagerung gleicht zumindest einer der Lagerringe sowohl fertigungsbedingte Toleranzen in der Aufnahme der Lagerung in dem Gehäuse des Getriebes als auch Fluchtungsfehler der Zentren sich gegeneinander gegenüberliegender Druckräume aus. Gleichzeitig spannt der Lagerring die Wälzkörper in der Lagerung spielfrei vor. Das Schaltelement ist mittels der Lagereinheiten exakt, spielfrei und reibungsarm geführt. Eine derartige Lagerung ist bisher aufgrund eines erheblichen vorrichtungstechnischen Aufwandes als unvorteilhaft angesehen. Deshalb ist dem Kolben ein Führungsabschnitt vorgeschaltet, über den der Kolben in dem Druckraum geführt ist und über den sich die Schaltschiene in dem Druckraum abstützt. Auf eine Auskleidung des Druckraumes wird verzichtet, d. h. die den Kolben führende Zylinderbohrung ist direkt in das Leichtmetallgehäuse des Getriebes eingebracht. Diese an sich zufriedenstellende Lösung hat den Nachteil, dass, zusätzlich zu den Reibkräften aus der bewegten Dichtung, Reibkräfte an dem längs bewegten Führungsabschnitt entstehen. Wechselnde, aus ungleichmäßiger oder zu hoher Reibung entstehende Kräfte verhindern einen konstanten Druckaufbau und damit einen konstanten Schub an dem Schaltelement und damit eine konstante Betätigungskraft an der Schiebemuffe. Eine präzise Weg- bzw. Kraft-Weg abhängige Steuerung der Schaltung ist behindert. Die in gegenüberliegenden Wänden des Getriebegehäuses eingebrachten Druckräume müssen exakt miteinander fluchten. Lageabweichungen der Zentren der Bohrungen zueinander führen zum Verkanten der Führungsabschnitte und damit zu höherer Reibung in der Vorrichtung. Der Aufwand für das Einbringen der Bohrungen für die Druckräume in die Wandungen des Getriebegehäuses ist relativ hoch.

### Zusammenfassung der Erfindung

Die Aufgabe der Erfindung ist es daher eine Vorrichtung gattungsbildenden Art zu schaffen, mit der die vorgenannten Nachteile vermieden sind.

Diese Aufgabe ist nach dem Gegenstand des kennzeichnenden Teils des Anspruchs 1 dadurch gelöst, dass der Druckraum zumindest umfangsseitig durch einen sich an dem Gehäuse abstützenden äußeren Lagerring der Lagereinheit zumindest teilweise begrenzt ist, wobei der Kolben in dem Lagerring längsbeweglich angeordnet ist. Die Vorrichtung weist demnach wenigstens eine Lagereinheit auf, die das Schaltelement sowohl längsbeweglich lagert als auch den Druckraum und Kolben für die druckmittelunterstützte bzw. druckmittelangetriebene Längsbewegung des Schaltelementes aufnimmt. Der äußere Lagerring, auch häufig Außenring genannt, weist wenigstens eine Lauffläche oder Laufbahnen für die Wälzkörper auf und begrenzt zumindest umfangsseitig auch den Druckraum. Der äußere Lagerring bzw. ein Abschnitt des Ringes sitzt in einer entsprechenden Aufnahme des Gehäuses im Getriebe. Der dünnwandige Lagerring kleidet dabei die Aufnahme des Gehäuses teilweise oder vollständig aus. Der Druckraum ist mittels des Lagerringes umfangsseitig druckdicht umschlossen. Alternativ ist die Lagerung umfangsseitig nicht dicht. Dann ist der Druckraum durch die Wandung der Aufnahme umfangsseitig druckdicht abgeschlossen.

An einem napfförmig ausgebildeten Außenring ist auch eine der Längsseiten des Druckraumes mittels der Bodens verschließbar. Der Boden des Napfes und/oder auch der zylindrische Abschnitt des äußeren Lagerringes sind vorteilhaft mit den notwendigen Durchbrüchen versehen, durch die das Druckmittel in den Druckraum gelangt und aus diesem verdrängt wird. An der bevorzugt zylindrisch gestalteten inneren Mantelfläche des Lagerringes stützen und wälzen sich die Wälzkörper ab. Gleichzeitig bildet diese Mantelfläche eine Längsführung und ggf. eine Dichtfläche für den Sitz eines oder mehrerer der Kolben. Der freie innere Durchmesser des äußeren Lagerringes im Druckraum ist an die notwenige Querschnittsfläche des Kolbens für die Umsetzung des Druckes in eine definierte Betätigungskraft an dem Schaltelement angepasst. Der freie innere Durchmesser im Bewegungsbereich der Wälzkörper ist beispielsweise abhängig von den Anforderungen an die erforderliche Tragzahl und abhängig von dem notwenigen Bauraum für die Aufnahme des Schaltelementes, für die Aufnahme der Wälzkörper, ggf. für die Aufnahme eines Lagerkäfigs und für die Aufnahme eines inneren Lagerringes. Der äußere Lagerring ist innen entweder abgestuft mit sich von der Kolbenführung/dem Druckraum zu dem Bewegungsbereich der Wälzkörper unterscheidenden Durchmessern versehen oder weist für alle Abschnitte durchgängig den gleichen Querschnitt auf. Die Länge der Hülse entspricht mindestens dem Hub des Kolbens und dem Weg der synchron mit dem Kolben längsbeweglichen Lagerung des Schaltelementes.

Der äußere Lagerring ist bevorzugt als ein hülsen- oder napfförmiges Ziehteil aus Blech ausgebildet. Die erforderliche feine Qualität an der Oberfläche der Kolbenführung/Dichtfläche und der Wälzlagerung ist entweder durch die Wahl eines Ausgangsmateriales mit entsprechender Oberflächenqualität gewährleistet oder wird durch Abstrecken und/oder Verfestigen der Oberfläche des Bleches beim Ziehvorgang sichergestellt. Eine spanabhebende Feinbearbeitung ist nicht notwendig. Der äußere Lagerring ist, insbesondere in der Großserienproduktion oder Massenfertigung, mit relativ einfachen Werkzeugen kostengünstig herstellbar.

Eine Ausgestaltung der Erfindung sieht vor, dass die Lagereinheit einen inneren Lagerring sowie einen äußeren Lagerring aufweist. Der innere Lagerring umgreift das Schaltelement umfangsseitig zumindest teilweise. Belastungen an dem Schaltelement quer zur Längsrichtung des Schaltelementes werden dabei von dem inneren Lagerring über die Wälzkörper an dem äußeren Lagerring in dem Gehäuse abgestützt. Das Lager bzw. die Lagereinheit ist mittels des inneren Lagerringes spielfrei gestellt. Dazu stützt sich der innere Lagerring an dem Schaltelement ab und spannt die Wälzkörper radial nach außen gegen den äußeren Lagerring elastisch vor.

Ein oder zwei der Lagereinheiten sitzen mit dem inneren Lagerring zumeist jeweils an einem Ende des Schaltelements und stützen sich in einer Aufnahme des Getriebegehäuses ab. Da derartige Lager zur längsbeweglichen Lagerung der Schaltelemente dienen, sind zumeist Laufbahnen in die oftmals spanlos aus Blech geformten inneren Lagerringe eingebracht. Die Lagerringe umgreifen in Umfangsrichtung ganz oder teilweise das Ende des Schaltelementes. Die Wälzkörper der Lagereinheit, zumeist Kugeln aber auch zylindrische Wälzkörper, sind oftmals in einem Käfig gehalten und geführt. Der Käfig ist wahlweise aus Kunststoff oder aus Blech gestaltet und umgreift bzw. übergreift den inneren Lagerring ganz oder teilweise. Diese Lagerringe weisen oft einen von der kreisrunden Form abweichenden Querschnitt auf und sind damit dem Querschnitt, z. B. einem rechteckigen Querschnitt, der Stange am Sitz der Lagereinheit angepasst. Ein derartiges Lager ist spielfrei ausgeführt, d. h., das Schaltelement ist mittels des Lagers in dem Gehäuse ohne Radialluft gelagert. Dazu ist die Lagereinheit in sich vorgespannt. Hierzu ist ein zumindest in dem Abwälzbereich der Wälzkörper elastisch vorgespannter und einfedemder Lagerring vorgesehen. In der Regel ist der innere Lagerring einteilig aus einem relativ dünnwandigen Blech gestanzt bzw. geschnitten und anschließend durch Biegen oder Abkanten in seine Form gebracht. Der Lagerring umgreift das Schaltelement umfangsseitig und ist zu einer Seite hin schlitzartig geöffnet. Der Querschnitt des Lagerringes ist dem Querschnitt, zumeist einem rechteckigen Querschnitt, des Schaltelementes am Sitz der Lagereinheit angepasst und stützt sich über nach innen ragende lappenartig ausgebildete sowie aus dem Blech geformte Stützen an der Oberfläche des Schaltelementes ab. Vorzugsweise Kugeln laufen in den an dem Lagerring eingeformten Laufbahnen ab und sind jeweils paarweise in einer Tasche eines Käfigs geführt. Es sind in der Regel drei der Taschen am Umfang des Käfigs ausgebildet. Alternativ dazu weist der Käfig einen Kugelumlauf auf, in dem die Kugeln in einer endlosen Reihe umlaufen.

Die Vorrichtung, bestehend aus dem äußeren Lagerring, dem inneren Lagerring, den Wälzkörpern, ggf. einem Käfig und dem Kolben ist als eine Montageeinheit vormontierbar. Der vorrichtungstechnische Aufwand ist auf ein Minimum reduziert. Der elastisch nachgebende Innenring in der Lagereinheit gleicht Fluchtungsfehler der Zentren sich einander gegenüberliegender Aufnahmen für die Lagereinheit in dem Getriebegehäuse aus. Der fertigungstechnische Aufwand für das Einbringen der Aufnahmen in das Getriebegehäuse ist reduziert. Der Kolben innerhalb des äußeren Lagerringes ist von Kräften aus radialer Belastung an dem Schaltelement frei und in dem äußeren Lagerring exakt geführt. Reibungsverluste aufgrund ungleichmäßiger Belastung des Kolbens aus Querkräften auf das Schaltelement und somit Streuungen im Druckaufbau werden vermieden. Die Aufnahmen in dem Getriebegehäuse sind mit größeren Toleranzen herstellbar. Die Feinbearbeitung der Aufnahmen entfällt, da der Kolben in dem äußeren Lagerring geführt ist sowie ggf. mit einer Dichtung an der Wandung des äußeren Lagerringes anliegt.

### Kurze Beschreibung der Zeichnungen

Die Erfindung wird nachfolgend anhand von Ausführungsbeispielen näher erläutert. Es zeigen:
- Figur 1: ein Ausführungsbeispiel einer erfindungsgemäßen Vorrichtung,
- Figur 2: ein weiteres Ausführungsbeispiel einer erfindungsgemäßen Vorrichtung und
- Figur 3: die Vorrichtung aus Figur 2, in einem Schnitt entlang der Linie III-III.

### Detaillierte Beschreibung der Zeichnungen

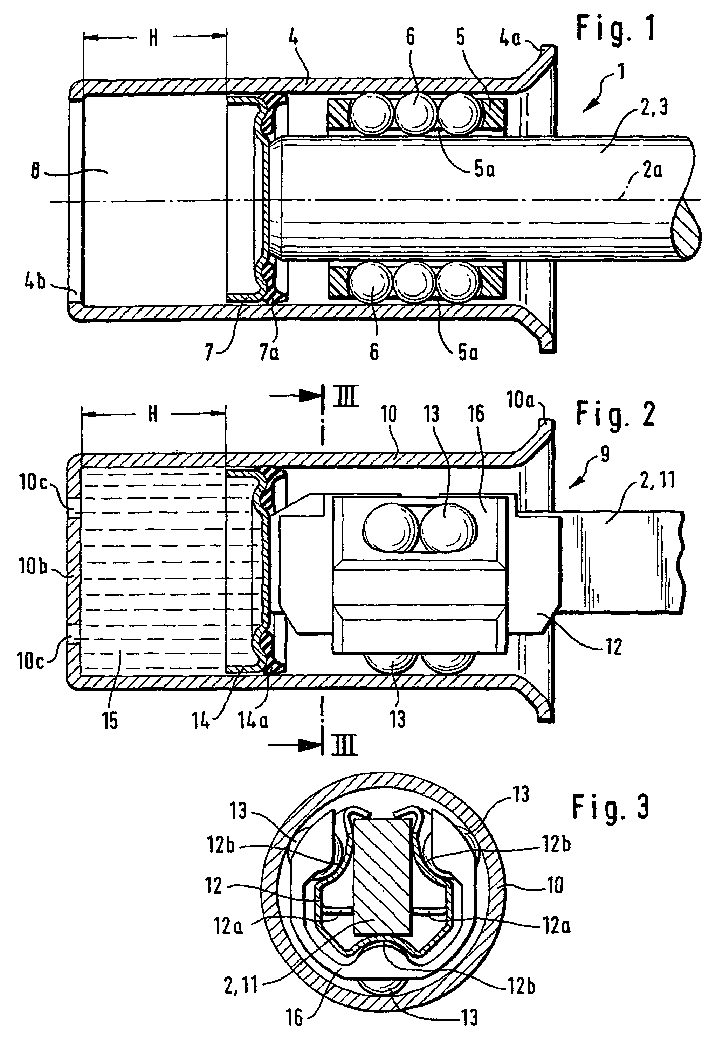

Figur 1 zeigt ein Ausführungsbeispiel einer Vorrichtung 1 zur Lagerung und zumindest hilfsweisen Betätigung eines Schaltelementes 2. Das Schaltelement 2 ist eine Schaltwelle 3. In einem äußeren Lagerring 4 sind mittels eines Käfigs 5 geführte Wälzkörper 6 in Form von Kugeln sowie ein Kolben 7 aufgenommen. Der äußere Lagerring 4 begrenzt umfangsseitig einen Druckraum 8. Der Kolben 7 begrenzt den Druckraum 8 zur Schaltwelle 3 und ist in dem äußeren Lagerring 4 längsbeweglich geführt. Eine Dichtung 7a ist an dem spanlos aus Blech geformten Kolben befestigt und liegt umlaufend an dem äußeren Lagerring 4 an. Das Schaltelement 2 ist gegen quer zur Längsachse 2a des Schaltelementes 2 gerichtete Kräfte mittels der Wälzkörper 6 in dem äußeren Lagerring 4 abgestützt. Der Käfig 5 weist mehrere am Umfang der Schaltwelle 3 angeordnete Taschen auf, in denen jeweils ein oder eine Reihe der Wälzkörper 6 geführt ist. Der äußere Lagerring 4 ist hülsenförmig aus einem dünnwandigen Blech gezogen und weist einen zylindrischen Querschnitt auf. Ein Zentrierbund 4a an dem äußeren Lagerring 4 erleichtert die Montage des Kolbens 7 sowie des Käfigs 5 mit den Wälzkörpern 6 in den äußeren Lagerring 4.

Durch eine Öffnung 4b an der dem Zentrierbund 4a abgewandten Seite des äußeren Lagerringes 4 ist der Druckraum 8 mit einem nicht dargestellten Druckmittel, z. B. mit Luft oder mit einer hydraulischen Flüssigkeit, ausgefüllt. Die hydraulische Flüssigkeit ist beispielsweise das Getriebeöl. Der mittels Druck beaufschlagte Kolben 7 bewegt sich in Richtung des Zentrierbundes 4a und verschiebt dabei die Schaltwelle 3 in Längsrichtung. Dabei stützt sich die Schaltwelle 3 über die sich an der zylindrisch ausgebildeten Mantelfläche des äußeren Lagerringes 4 abwälzenden Wälzkörper 6 an dem äußeren Lagerring 4 ab. Der Kolben 7 steht nach der Darstellung in Figur 1 in einer Position in der der größte Hub H des Kolbens 7 zurückgelegt ist. Aus dieser Position wird der Kolben 7 mittels der Schaltwelle 3 längs in die entgegengesetzte Richtung in Richtung der Öffnung 4b verschoben. Die Schaltwelle 3 ist dabei beispielsweise mittels einer weiteren erfindungsgemäßen und nicht dargestellten Vorrichtung an dem anderen Ende der Schaltwelle betätigt.

Figur 2 zeigt ein weiteres Ausführungsbeispiel einer erfindungsgemäßen Vorrichtung 9. In einem äußeren Lagerring 10 ist ein Schaltelement 2 längsbeweglich aufgenommen. Das Schaltelement 2 ist eine Schaltschiene 11, die sich über einen inneren Lagerring 12 an Wälzkörpern 13 und über die Wälzkörper 13 an dem äußeren Lagerring 10 abstützt. Die Wälzkörper 13 sind in einem Käfig 16 geführt. In dem äußeren Lagerring 10 ist außerdem ein Kolben 14 längsbeweglich geführt. Der äußere Lagerring 10 ist ein napfförmig-zylindrisch ausgebildetes Ziehteil aus Blech. Ein Zentrierbund 10a erleichtert die Montage der Einzelteile zu einer Einheit. Ein Druckraum 15 ist zur Schaltschiene 11 hin mittels des Kolbens 14 begrenzt. An dem Kolben 14 ist eine einen Ringspalt zwischen dem Kolben 14 und dem äußeren Lagerring 10 überbrückende Dichtung 14a befestigt. Zur anderen Seite ist der Druckraum durch den Boden 10b des Lagerringes 10 abgeschlossen. Der Boden 10b weist eine oder mehrere Eintritts- bzw. Austrittsöffnungen 10c für eine hydraulische Flüssigkeit, z. B. das Getriebeöl, auf. Der durch die hydraulische Flüssigkeit mit Druck beaufschlagte Kolben 14 bewegt sich in Richtung des Zentrierbundes 10a und verschiebt dabei die Schaltschiene 11 längs. In Figur 2 ist der Kolben 14 in einer Position dargestellt, in der der maximale Hub H durch den Kolben 14 zurückgelegt ist. Aus dieser Position ist der Kolben 14 durch die Schaltschiene 11 beaufschlagt in entgegengesetzte Richtung längsbewegbar. Dabei verdrängt der Kolben die hydraulische Flüssigkeit aus dem Druckraum 15.

Aus Figur 3, einer Schnittdarstellung durch die Vorrichtung 9, ist ersichtlich, dass die Schaltschiene 11 zumindest an ihrem Ende einen rechteckigen Querschnitt aufweist. Der innere Lagerring 12 ist aus Blech geformt, an seiner oberen Seite geschlitzt und umgreift die Schaltschiene 11 in Umfangsrichtung somit teilweise. Aus dem Blech des inneren Lagerringes 12 sind Stützen 12a abgewinkelt, die an der Schaltschiene 11 anliegen. In den inneren Lagerring 12 sind Laufbahnen 12b eingebracht. Die Laufbahnen 12b sind elastisch nachgebend ausgelegt und spannen jeweils eine Reihe von Wälzkörpern 13 gegen den äußeren Lagerring 10 vor. Dabei stützt sich der innere Lagerring 12 an der Schaltschiene 11 ab. Die Stützen 12a stabilisieren die Anordnung. Die Wälzkörper 13 sind wiederum Kugeln. Der Käfig 16 ist für eine einfache Montage auf den inneren Lagerring 12 in Längsrichtung geschlitzt ausgeführt. Die Anordnung der Lagereinheit ist spielfrei.

### Bezugszeichen

- 1: Vorrichtung
- 2: Schaltelement
- 2a: Längsachse
- 3: Schaltwelle
- 4: Lagerring
- 4a: Zentrierbund
- 4b: Öffnung
- 5: Käfig
- 5a: Tasche
- 6: Wälzkörper
- 7: Kolben
- 7a: Dichtung
- 8: Druckraum
- 9: Vorrichtung
- 10: Lagerring
- 10a: Zentrierbund
- 10b: Boden
- 10c: Öffnung
- 11: Schaltschiene
- 12: Lagerring
- 12a: Stütze
- 12b: Laufbahn
- 13: Wälzkörper
- 14: Kolben
- 14a: Dichtung
- 15: Druckraum
- 16: Käfig

## Patentansprüche

1. Vorrichtung (1, 9) zur Lagerung und zur zumindest hilfsweisen Betätigung eines Schaltelementes (2), wobei das Schaltelement (2), zumindest mittels wenigstens eines in einem Druckraum (8), 15) längsbeweglichen sowie mit Druck beaufschlagten Kolbens (7, 14) unterstützt, bei einer Schaltbewegung längs relativ zu einem dünnwandigen Lagerring (4, 10) bewegbar ist und wobei das Schaltelement (2) mittels sich an dem Lagerring (4, 12) abwälzenden Wälzkörpern (6, 13) an dem Lagerring (4, 10) abgestützt ist, **dadurch gekennzeichnet, dass** der Druckraum (8, 15) zumindest umfangsseitig durch einen das Schaltelement (2) stützenden äußeren Lagerring zumindest teilweise begrenzt ist, wobei der Kolben (7, 14) in dem äußeren Lagerring (4, 12) längsbeweglich angeordnet ist.

2. Vorrichtung nach Anspruch 1, **dadurch gekennzeichnet, dass** die Vorrichtung (9) einen inneren Lagerring (12) sowie einen äußeren Lagerring. (10) aufweist, wobei der innere Lagerring (12) das Schaltelement (2) umfangsseitig zumindest teilweise umgreift und sich dabei über die Wälzkörper (13) an dem äußeren Lagerring (10) abstützt, und wobei der innere Lagerring (12), sich an dem Schaltelement (2) abstützend, die Wälzkörper (13) radial nach außen gegen den äußeren Lagerring (10) elastisch spielfrei vorspannt.

3. Vorrichtung nach Anspruch 2, **dadurch gekennzeichnet, dass** der innere Lagerring (12) das Schaltelement (2) an einem im Querschnitt rechteckigen Ende des Schaltelementes (2) umfangsseitig zumindest teilweise umgreift und dass der innere Lagerring (12) wenigstens drei längs verlaufende Laufbahnen (12b) für die Wälzkörper (13) aufweist.

4. Vorrichtung nach Anspruch 1, **dadurch gekennzeichnet, dass** der äußere Lagerring (4) hülsenförmig ausgebildet ist, wobei der Druckraum (8) von dem zylindrisch ausgebildeten sowie den Druckraum (8) umfangsseitig geschlossen umgreifenden äußeren Lagerring (4) begrenzt ist, und dass der Kolben (7) in dem äußeren Lagerring (4) längs geführt ist.

5. Vorrichtung nach Anspruch 1, **dadurch gekennzeichnet, dass** der äußere Lagerring (10) napfförmig ausgebildet ist, wobei der Druckraum (15) radial außenseitig von dem zylindrisch ausgebildeten Lagerring (12) sowie an einer Längsseite durch einen Boden (10b) des äußeren Lagerringes (10) begrenzt ist, und dass der Kolben (14) in dem zylindrisch ausgebildeten Lagerring (12) längs geführt ist.

6. Vorrichtung nach Anspruch 1, **dadurch gekennzeichnet, dass** der Druck mittels einer hydraulischen Flüssigkeit erzeugt ist und dass der Kolben (7, 14) eine Dichtung (7a, 14a) aufweist, wobei die Dichtung (7a, 14a) in Umfangsrichtung umlaufend an dem äußeren Lagerring (4, 12) zumindest zeitweise anliegt.

7. Vorrichtung nach Anspruch 1, **dadurch gekennzeichnet, dass** das Schaltelement (2) eine Schaltwelle (3) ist, wobei die Schaltwelle (3) durch zwei der in einer Wechselwirkung stehenden Vorrichtungen (1) längs hin und her bewegbar ist.

8. Vorrichtung nach Anspruch 1, **dadurch gekennzeichnet, dass** das Schaltelement (2) eine Schaltschiene (11) ist, wobei die Schaltschiene (11) durch zwei der in einer Wechselwirkung miteinander stehenden Vorrichtungen (9) hin und her bewegbar ist, wobei jeweils einer der Druckräume (15) in Abhängigkeit von der Bewegungsrichtung mittels einer hydraulischen Flüssigkeit in dem Druckraum (15) derartig druckbeaufschlagt ist, dass jeweils der den Druckraum (15) begrenzende Kolben (14) eine die Schaltbewegung zumindest unterstützende sowie längs mit der Schaltbewegung gerichtete Kraft an der Schaltschiene (11) erzeugt.

## Claims

1. Device (1, 9) for supporting and for at least contributing to the activation of an actuating element (2), wherein the actuating element (2) is supported at least by means of at least one piston (7, 14) which can move longitudinally in a pressure space (8, 15) and to which pressure is applied, and can be moved longitudinally in relation to a thin-walled bearing ring (4, 10) during a switching movement, and wherein the actuating element (2) is supported on the bearing ring (4, 10) by means of roller bodies (6, 13) which roll on the bearing ring (4, 12), **characterized in that** the pressure space (8, 15) is at least partially bounded at its circumference by an external bearing ring which supports the actuating element (2), wherein the piston (7, 14) is arranged so as to be able to be moved longitudinally in the outer bearing ring (4, 12).

2. Device according to Claim 1, **characterized in that** the device (9) has an inner bearing ring (12) and an outer bearing ring (10), the inner bearing ring (12) engaging at least partially around the actuating element (2) at its circumference and being supported in the process on the outer bearing ring (10) by means of the roller bodies (13), and wherein the inner bearing ring (12) elastically prestresses the roller bodies (13) radially against the outer bearing ring (10) in the outward direction without play while being supported on the actuating element (2).

3. Device according to Claim 2, **characterized in that** the inner bearing ring (12) at least partially surrounds the actuating element (2) at its circumference at an end of the actuating element (2) which has a rectangular cross section, and **in that** the inner bearing ring (12) has at least three longitudinally extending raceways (12b) for the roller bodies (13).

4. Device according to Claim 1, **characterized in that** the outer bearing ring (4) is of sleeve-shaped design, the pressure space (8) being bounded by the outer bearing ring (4) which is of cylindrical design and engages around the pressure space (8) at its circumference in a continuous fashion, and **in that** the piston (7) is guided longitudinally in the outer bearing ring (4).

5. Device according to Claim 1, **characterized in that** the outer bearing ring (10) is of cup-shape design, the pressure space (15) being bounded radially on the outside by the bearing ring (12) which is of cylindrical design, and at a longitudinal side by a base (10b) of the outer bearing ring (10), and **in that** the piston (14) is guided longitudinally in the bearing ring (12) which is of cylindrical design.

6. Device according to Claim 1, **characterized in that** the pressure is generated by means of a hydraulic fluid, and **in that** the piston (7, 14) has a seal (7a, 14a), wherein the seal (7a, 14a) bears at least temporarily against the outer bearing ring (4, 12) around the entire circumference.

7. Device according to Claim 1, **characterized in that** the actuating element (2) is an actuating shaft (3), wherein the actuating shaft (3) can be moved to and fro in the longitudinal direction by two devices (1) which interact.

8. Device according to Claim 1, **characterized in that** the actuating element (2) is an actuating rail (11), wherein the actuating rail (11) can be moved to and fro by two devices (9) which interact, wherein pressure can be applied to in each case one of the pressure spaces (15) as a function of the direction of movement by means of a hydraulic fluid in the pressure space (15) in such a way that in each case the piston (14) which bounds the pressure space (15) generates a force at the actuating rail (11) which at least supports the switching movement and is directed longitudinally with respect to the actuating movement.

## Revendications

1. Dispositif (1, 9) de logement et d'actionnement au moins accessoire d'un élément de couplage (2), l'élément de couplage (2), en étant soutenu au moins au moyen d'au moins un piston (7, 14) pouvant se déplacer dans le sens longitudinal dans une chambre de compression (8, 15) et soumis à une pression, pouvant être déplacé lors d'un mouvement de couplage dans le sens longitudinal par rapport à une bague d'appui (4, 10) à paroi mince et l'élément de couplage (2) étant appuyé sur la bague d'appui (4, 12) au moyen d'un corps roulant (6, 13) qui roule sur la bague d'appui (4, 12), **caractérisé en ce que** la chambre de compression (8, 15) est au moins sur son pourtour délimitée au moins partiellement par une bague d'appui extérieure qui soutient l'élément de couplage (2), le piston (7, 14) étant disposé de manière à être mobile dans le sens longitudinal dans la bague d'appui extérieure (4, 12).

2. Dispositif selon la revendication 1, **caractérisé en ce que** le dispositif (9) présente une bague d'appui intérieure (12) ainsi qu'une bague d'appui extérieure (10), la bague d'appui intérieure (12) entourant au moins partiellement l'élément de couplage (2) du côté de son pourtour et s'appui ici sur la bague d'appui extérieure (10) par le biais du corps roulant (13), et la bague d'appui intérieure (12) réalisant une précontrainte élastique sans jeu dans le sens radial vers l'extérieur contre la bague d'appui extérieure (10) du corps roulant (13) qui s'appuie sur l'élément de couplage (2).

3. Dispositif selon la revendication 2, **caractérisé en ce que** la bague d'appui intérieure (12) entoure au moins partiellement l'élément de couplage (2) du côté de son pourtour au niveau d'une extrémité de section transversale rectangulaire et que la bague d'appui intérieure (12) présente au moins trois bandes de roulement (12b) qui s'étendent dans le sens longitudinal pour les corps roulants (13).

4. Dispositif selon la revendication 1, **caractérisé en ce que** la bague d'appui extérieure (4) est réalisée en forme de douille, la chambre de compression étant délimitée par la bague d'appui extérieure (4) de forme cylindrique et entourant la chambre de compression (8) du côté du pourtour en la fermant et que le piston (7) est guidé dans le sens longitudinal dans la bague d'appui extérieure (4).

5. Dispositif selon la revendication 1, **caractérisé en ce que** la bague d'appui extérieure (10) est réalisée en forme de godet, la chambre de compression (15) étant délimitée dans le sens radial du côté extérieur par la bague d'appui (12) de forme cylindrique ainsi qu'au niveau d'un côté longitudinal par un fond (10b) de la bague d'appui extérieure (10) et que le piston (14) est guidé dans le sens longitudinal dans la bague d'appui (12) de forme cylindrique.

6. Dispositif selon la revendication 1, **caractérisé en ce que** la pression est produite au moyen d'un liquide hydraulique et que le piston (7, 14) présente un joint (7a, 14a),le joint (7a, 14a) reposant au moins temporairement sur la bague d'appui extérieure (4, 12) de manière circulaire dans le sens du pourtour.

7. Dispositif selon la revendication 1, **caractérisé en ce que** l'élément de couplage (2) est un arbre de couplage (3), l'arbre de couplage (3) pouvant être déplacé dans un sens et dans l'autre dans le sens longitudinal par deux dispositifs (1) en interaction.

8. Dispositif selon la revendication 1, **caractérisé en ce que** l'élément de couplage (2) est un rail de couplage (11), le rail de couplage (11) pouvant être déplacé dans un sens et dans l'autre par deux dispositifs (9) en interaction l'un par rapport à l'autre, l'une des chambres de compression (15) étant à chaque fois exposée à la pression en fonction du sens du mouvement au moyen d'un liquide hydraulique dans la chambre de compression (15) de telle sorte que le piston (14) qui délimite à chaque fois la chambre de compression (15) génère une force au niveau du rail de couplage (11) qui au moins soutient le mouvement de couplage et qui est dirigée dans le sens longitudinal avec le mouvement de couplage.
